# EUROPÄISCHE PATENTSCHRIFT

(11) **EP 2 100 759 B1**
(45) Veröffentlichungstag und Bekanntmachung des Hinweises auf die Patenterteilung: **12.10.2011**
(21) Anmeldenummer: 09002401.9
(22) Anmeldetag: 20.02.2009
(51) Int. Cl.: B60H 1/00

(54) **Trennwand für Kraftfahrzeugklimaanlagen**
Partition wall for vehicle air conditioning units
Cloison pour des systemes de climatisation de véhicules automobiles

(30) Priorität: 12.03.2008 DE 102008013952
(43) Veröffentlichungstag der Anmeldung: 16.09.2009
(73) Patentinhaber: Behr GmbH & Co. KG, 70469 Stuttgart (DE)
(72) Erfinder: Augull, Michael, 71088 Holzgerlingen (DE); Mühleisen, Harald, 70771 Leinfelden-Echterdingen (DE)
(74) Vertreter: Grauel, Andreas

(56) Entgegenhaltungen:
- EP-A- 1 288 031
- DE-A1- 10 147 113
- DE-A1-102006 027 995
- US-A- 4 582 252
- US-A- 5 462 483

## Beschreibung

Die Erfindung betrifft eine Trennwand für Kraftfahrzeugkiimaanlagen. Die Erfindung betrifft weiterhin eine Kraftfahrzeugklimaanlage mit zumindest einer derartigen Trennwand.

Heutige Kraftfahrzeugklimaanlagen werden in der Regel derart ausgelegt, dass sich beim Einstellen einer bestimmten Temparatur (bzw. einer bestimmten Stellung des Temparaturregelelements) an der Bedieneinheit der Kraftfahrzeugklimaanlage gewisse Temperaturunterschiede an den unterschiedlichen Auslässen der Kraftfahrzeugklimaanlage einstellen. Die übliche Temperaturaufteilung sieht dabei vor, dass die aus den Mittel- und die aus den Seitendüsen der Klimaanlage ausgeblasene Luft, die den Kopfbereich des Fahrers bzw. Beifahrers versorgt, eine niedrigere Temperatur aufweist, als die Temperatur der von den Fußraumdüsen der Klimaanlage ausgeblasene Luft die den Fußbereich des Fahrers bzw. des Beifahrers versorgt. Eine derartige Luftverteilung wird von den meisten Personen als besonders angenehm empfunden. Die Temperaturdifferenz ist dabei durch den Aufbau der Kraftfahrzeugklimaanlage fest vorgegeben.

Bei Kraftfahrzeugklimaanlagen, die besonders hohen Komfortansprüchen genügen sollen, wird daher eine zusätzliche Einstellmöglichkeit vorgesehen, mit der die Temperatur der aus den Mittel- bzw. Seitendüsen austretenden Luft gegenüber der Temperatur der aus den Fußraumdüsen austretenden Luft durch eine entsprechende Einstellmöglichkeit zusätzlich abgesenkt werden kann. Auf diese Weise lässt sich die Klimaanlage besser auf die individuellen Komfortbedürfnisse der jeweiligen Person anpassen.

Bei heutigen Kraftfahrzeugklimaanlagen wird zur Umsetzung dieser Vorgabe ein sogenannter Bypasskanal vorgesehen, der in der Regel Luft, die vom Verdampfer der Klimaanlage gekühlt wurde, aus dem Hauptluftstrom abzweigt, an dem Heizkörper der Klimaanlage vorbeiführt und hinter dem Heizkörper wieder dem Hauptluftstrom zuführt Der Bypasskanal wird dabei als separates Bauteil ausgeführt.

Eine derartige Kraftfahrzeugklimaanlage ist beispielsweise in DE 10 2006 027 995 A1 beschrieben. Hier wird ein Teil der Luft, die den Verdampfer der Klimaanlage durchströmt hat, einem Zwischenraum, der sich zwischen dem Verdampfer und dem Heizkörper der Klimaanlage befindet, entnommen. Die abgezweigte Luft wird über einen separat ausgebildeten Bypasskanal am elektrischen Heizkörper und am Kühlmittelheizkörper der Klimaanlage vorbeigeführt. Hinter den beiden Heizkörpern wird die durch den Bypasskanal geleitete Luft wieder dem Hauptluftstrom zugeführt.

US 5 462 483 offenbart eine Klimaanlage nach dem Oberbegriff des Anspruchs 1.

Nachteilig bei derartigen Klimaanlagen mit separatem Bypasskanal sind die dadurch entstehenden zusätzlichen Kosten. Es muss ein separates Bauteil konstruiert, produziert und vorrätig gehalten werden. All dies verursacht entsprechende Kosten. Auch der Einbau des separaten Bypasskanals in die Klimaanlage verursacht zusätzliche Kosten. Ein weiterer Nachteil besteht darin, dass das zusätzliche Bauteil auch einen entsprechenden Bauraum benötigt, was bei heutigen Kraftfahrzeugen überaus unerwünscht ist.

Die Aufgabe der Erfindung besteht somit darin, eine Mitteltrennwand für Kraftfahrzeugklimaanlagen, bzw. eine Kraftfahrzeugklimaanlage zur Verfügung zu stellen, mit der erhöhte Komfortbedürfnisse befriedigt werden können, und die kostengünstig herstellbar ist.

Dazu wird vorgeschlagen, eine Trennwand für Kraftfahrzeugklimaanlagen, insbesondere eine Mitteltrennwand für Mehrzonenkraftfahrzeugklimaanlagen derart auszubilden, dass diese wenigstens einen integral ausgebildeten Luftführungskanal aufweist. Da bei heutigen Kraftfahrzeugklimaanlagen in der Regel ohnehin derartige Trennwände vorgesehen sind, ist es mit Hilfe der vorgeschlagenen Ausführung möglich, den Luftführungskanal (Bypasskanal) vorzusehen, ohne dass zusätzliche Bauteile benötigt werden. Neben der Herstellung in mehreren Fertigungsschritten ist es besonders vorteilhaft möglich, die Trennwand mit Luftführungskanal in einem einzigen Fertigungsschritt, beispielsweise durch einen Spritzgussvorgang, herzustellen. Auch die Lagerkosten können sich verringern. Schließlich ist es auch möglich, dass der erforderliche Gesamtbauraum der fertigen Kraftfahrzeugklimaanlage kleiner ist, als dies bei konventionellen Kraftfahrzeugklimaanlagen der Fall ist. Selbstverständlich ist es möglich, dass die Trennwand eine Mehrzahl von Luftführungskanälen aufweist, beispielsweise zwei, drei oder vier Luftführungskanäle, die je nach konkretem Erfordernis in die gleiche Richtung oder aber auch in unterschiedliche Richtungen verlaufen können.

Von Vorteil ist es, wenn wenigstens ein Luftführungskanal zumindest bereichsweise längs der Ebene der Trennwand verläuft. Diese Weiterbildung kann insbesondere bei Mitteltrennwänden für Mehrzonenklimaanlagen interessant sein, da diese üblicherweise im Wesentlichen senkrecht zu einem oder mehreren Wärmetauschern (meist Heizkörpern) eingebaut werden. In jedem Fall kann durch eine derartige Anordnung des Luftführungskanals ein besonders langer Luftführungskanal realisiert werden, der beispielsweise nur wenig oder gar keinen zusätzlichen Bauraum erfordert. Selbstverständlich ist es auch denkbar, zumindest einen oder gegebenenfalls sogar alle der im Zusammenhang mit der Trennwand vorgesehenen Luftführungskanäle in einem Winkel zur Ebene der Trennwand oder aber auch senkrecht zur Ebene der Trennwand vorzusehen.

Als vorteilhaft erweist es sich üblicherweise, wenn die Trennwand eine Aufnahmeöffnung für einen Wärmetauscher, insbesondere für einen Heizkörper aufweist. Dies gilt in besonderem Maße für Mitteltrennwände von Mehrzonenkraftfahrzeugklimaanlagen. Durch eine derartige Ausführung kann beispielsweise ein einzelner, durchgängiger Wärmetauscher bzw. ein einzelner durchgängiger Wärmetauscherblock (beispielsweise Kühlmittelheizkörper, Verdampfer und/oder elektrischer Heizkörper) verwendet werden, um unterschiedliche Temperaturbereiche zu realisieren, beispielsweise um eine Mehrzonenklimaanlage auszubilden. Die Aufnahmeöffnung kann beispielsweise als Schlitz mit einer geeigneten Tiefe und Breite ausgebildet werden.

Weiterhin ist es möglich, eine Trennwand derart auszuführen, dass wenigstens ein Luftführungskanal derart ausgebildet und eingerichtet ist, dass die darin geführte Luft wenigstens einen in der Kraftfahrzeugklimaanlage vorgesehenen Wärmetauscher und/oder wenigstens eine in der Kraftfahrzeugklimaanlage vorgesehene Luftmischkammer umgeht. Dies kann beispielsweise dadurch realisiert werden, dass die Eingangsöffnung(en) und die Ausgangsöffnung(en) des Luftführungskanals vor bzw. hinter einer Aufnahmeöffnung für einen Wärmetauscher, insbesondere einen Heizkörper angeordnet werden. Unabhängig von der konkreten Realisierung ist es mit Hilfe der vorgeschlagenen Ausbildungsweise auf besonders einfache Weise möglich, mehrere Luftteilströme (wobei in diesem Zusammenhang auch der Hauptluftstrom als Teilluftstrorn verstanden werden kann) mit jeweils unterschiedlichen Lufttemperaturen zu erzeugen, die jeweils unterschiedlichen Auslassdüsen der Kraftfahrzeugklimaanlage zugeleitet werden können. Dabei ist es nicht unbedingt erforderlich, dass die unterschiedlichen Luftteilströme jeweils ausschließlich und/oder exklusiv für eine einzelne Luftausströmöffnung bzw. für eine einzelne Gruppe von Luftausströmöffnungen (z.B. für die Mitteldüsen und/oder die Seitendüsen) zuständig sind. Es ist vielmehr auch möglich, dass die einzelnen Teilluftströme sich teilweise vermischen können bevor sie schlussendlich aus der entsprechenden Luftabgabeöffnung der Kraftfahrzeugklimaanlage heraus austreten. Sinnvoll kann es dabei sein, die Anordnung der Luftaustrittsöffnungen (der Austrittsöffnungen der Teilluftkanäle und/oder der Luftabgabeöffnungen der Kraftfahrzeugklimaanlage) so zu wählen, dass es nur in einem geringeren Ausmaß zu einer Luftdurchmischung - und damit zu einer Temperaturhomogenisierung - kommt.

Eine weitere sinnvolle Ausführungsmöglichkeit kann sich ergeben, wenn die Trennwand so ausgebildet wird, dass vorzugsweise an zumindest einem Ende zumindest eines Luftführungskanals eine Verzweigung in eine Mehrzahl von Teilkanälen vorgesehen ist. Insbesondere bei Zweizonenklimaanlagen können zwei (z.B. kombinerter Luftauslass für jeweils eine Mitteldüse und eine Seitendüse) oder vier (z.B. separate Luftauslässe für die Mitteldüse und die Seitendüse) Teilkanäle vorgesehen werden. Dementsprechend können insbesondere bei Vierzonenklimaanlagen vier, sechs oder acht Teilkanäle vorgesehen werden. Die Teilkanäle weisen vorzugsweise jeweils separate Luftauslassöffnungen auf, die insbesondere im Bereich entsprechender Auslassöffnungen der Klimaanlage, deren Luftauslasstemperatur abzusenken ist, liegen.

Weiterhin ist es möglich, die Trennwand derart auszubilden, dass an wenigstens einer Seitenwand, vorzugsweise an wenigstens zwei Seitenwänden des Luftführungskanals jeweils wenigstens eine Seitenöffnung vorhanden ist. Mit einer derartigen Ausführung ist es beispielsweise möglich, je nach Erfordernis (beispielsweise in Abhängigkeit von einer entsprechenden Einstellung am Bediengerät oder in Abhängigkeit vom Betriebszustand des Fahrzeugs, insbesondere in der Warmlaufphase des Kraftfahrzeugs) eine Temperaturabsenkung oder eine Temperaturerhöhung bestimmter Düsen vorzunehmen. Z.B. ist es möglich, in der Warmlaufphase des Motors die Mittel- bzw. Seitendüsen mit (gegebenenfalls nur geringfügig) erwärmter Luft zu versorgen, um so eine schnellere Erwärmung des Innenraums zu bewirken. Möglich wäre es auch, über eine Art "Querluftkanal" die Defrosterdüsen zusätzlich mit Warmluft zu versorgen, insbesondere dann, wenn keine Temperaturabsenkung der Mitteldüsen- bzw. Seitendüsen gewünscht ist.

Wenn bei der Trennwand wenigstens eine Luftdurchlassveränderungseinrichtung, welche vorzugsweise als Luftmengenverändenrngseinrichtung und/oder als Luftrichtungsveränderungseinrichtung und/oder als Luftver schlusseinrichtung ausgebildet ist, kann die Trennwand besonders einfach an die jeweiligen Bedürfnisse angepasst werden. Die Luftdurchlasseinrichtung(en) ist (sind) dabei jeweils vorzugsweise im Bereich von Eingangsöffnungen, Ausgangsöffnungen und/oder in einem mittleren Bereich des zumindest einen Luftführungskanals vorgesehen. Durch variable Klappenstellungen kann der Luftdurchsatz bzw. die Richtung der Luftdurchströmung nach Wunsch des Bedieners gesteuert werden. Mit einer Luftverschlusseinrichtung ist es darüber hinaus möglich, bei einer Klimaanlage, die über keine Temperaturabsenkung verfügen soll, den gleichen Grundkörper zu verwenden, was beispielsweise zu Kostenreduktionen führen kann. Ein derartiger Luftverschlusskörper kann beispielsweise durch eine feste Verschlusswand durch Einschweißen oder ein Spritzgussverfahren ausgebildet werden.

Weiterhin wird vorgeschlagen, eine Kraftfahrzeugklimaanlage mit zumindest einer Trennwand vom oben beschriebenen Typ zu versehen. Die Kraftfahrzeugklimaanlage weist dann die bereits beschriebenen Eigenschaften und Vorzüge in analoger Form auf.

Vorzugsweise ist die Kraftfahrzeugklimaanlage so ausgebildet, dass zumindest einer der integral mit der Trennwand ausgebildeten Luftführungskanäle zumindest einen Heizwärmetauscher und/oder zumindest einen Kühlwärmetauscher umgeht. Auch hier ergeben sich die bereits oben beschriebenen Eigenschaften und Vorzüge in analoger Weise.

Sinnvoll ist es darüber hinaus, die Kraftfahrzeugklimaanlage derart auszubilden, dass die durch zumindest einen der integral in der Trennwand ausgebildeten Luftführungskanäle geführte Luft zumindest zeitweise und/oder zumindest teilweise der Luftversorgung eines Teils der Luftauslässe der Kraftfahrzeugklimaanlage, vorzugsweise von Mitteldüsenluftauslässen und/oder von Seitendüsenluftauslässen dient. Unter zeitweise sind in diesem Zusammenhang insbesondere gewisse Betriebszustände des Kraftfahrzeugs, wie insbesondere eine Warmlaufphase des Motors zu verstehen. Auch hier ergeben sich die bereits oben beschriebenen Eigenschaften und Vorzüge in analoger Weise.

Im Folgenden wird die Erfindung anhand vorteilhafter Ausführungsbeispiele und unter Bezugnahme auf die beigefügte Zeichnung näher erläutert. Es zeigen:
- Fig. 1:: Eine Trennwand mit einem Luftführungskanal in schemati- scher, perspektivischer Ansicht;
- Fig. 2:: eine Kraftfahrzeugklimaanlage mit der in Fig. 1 dargestellten Trennwand in schematischer Draufsicht von vorne aus gese- hen;
- Fig. 3:: eine Kraftfahrzeugklimaanlage mit der in Fig. 1 dargestellten Trennwand im schematischen Querschnitt von der Seite aus gesehen;
- Fig. 4:: eine Kraftfahrzeugklimaanlage mit einem Bypasskanalventil im schematischen Querschnitt von der Seite aus gesehen;
- Fig. 5:: ein erstes Ausführungsbeispiel für ein Bypasskanalventil in schematischer Ansicht in unterschiedlichen Stellungen;
- Fig. 6:: ein zweites Ausführungsbeispiel für ein Bypasskanalventil in schematischer Ansicht in unterschiedlichen Stellungen;
- Fig. 7:: ein drittes Ausführungsbeispiel für ein Bypasskanalventil in schematischer Ansicht in unterschiedlichen Stellungen;
- Fig. 8:: ein viertes Ausführungsbeispiel für ein Bypasskanalventil in schematischer Ansicht in unterschiedlichen Stellungen;

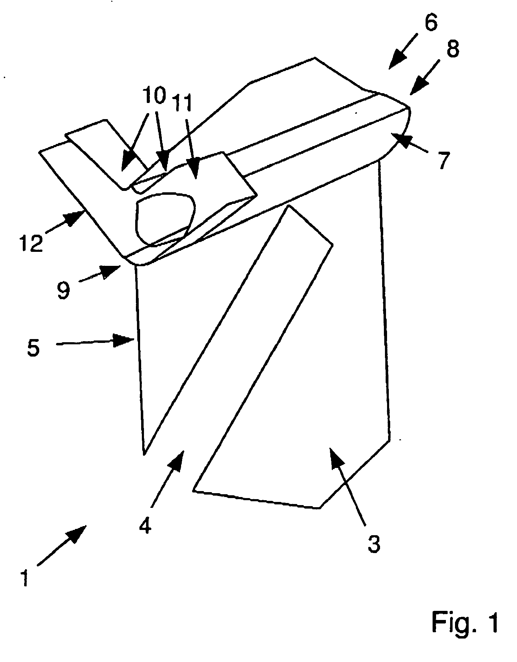

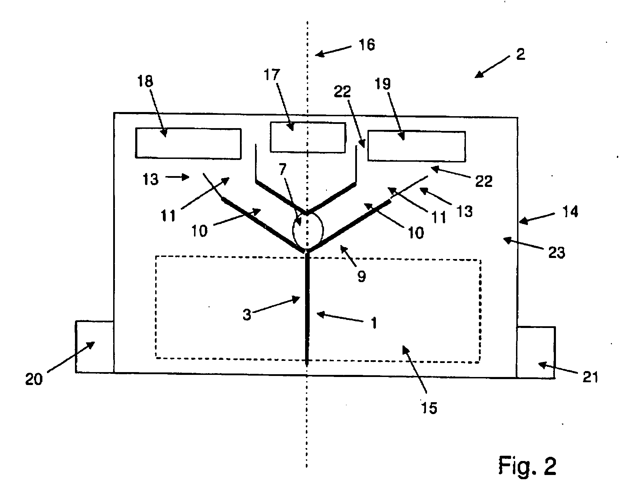

Fig. 1 zeigt eine Trennwand 1 für eine Kraftfahrzeugklimaanlage 2 (vgl. Fig. 2) in schematischer, perspektivischer Ansicht. Derartige Trennwände 1 werden beispielsweise in Mehrzonenklimaanlagen (beispielsweise Zweizonenklimaanlagen oder Vierzonenklimaanlagen) verwendet. Sie trennen die einzelnen Luftkanalbereiche, die die Luft für die einzelnen zu versorgenden Zonen des Fahrzeugs aufbereiten, voneinander, so dass zum Beispiel für die unterschiedlichen Zonen unterschiedliche Temperaturen eingestellt werden können.

Die Trennwand 1 weist einen dünnen, ebenen Wandbereich 3 auf. Die Außenkontur 5 der Trennwand 1 ist an den Innenraum der Kraftfahrzeugklimaanlage 2 (siehe Fig. 2), in die die Trennwand 1 eingebaut werden soll, angepasst. Weiterhin ist im Wandbereich 3 der Trennwand 1 ein Aufnahmeschlitz 4 für einen Wärmetauscher 15 (in der Regel ein Kühlmittelwärmetauscher, der mittlerweile häufig zusätzlich mit einem elektrischen Heizkörper versehen ist) vorgesehen. Mit Hilfe des Aufnahmeschlitzes 4 ist es möglich, eine Zweizonen- oder Mehrzonenklimaanlage mit einem einzelnen, durchgehenden Wärmetauscher bzw. Wärmetauscherblock zu realisieren. Selbstverständlich ist es auch möglich, mehrere Aufnahmeschlitze vorzusehen, beispielsweise um darin voneinander separat ausgebildete elektrische Heizkörper und Kohlmittelheizkörper aufzunehmen.

In in Fig. 1 oberen Bereich 6 der Trennwand 1 ist integral zum Wandbereich 3 der Trennwand 1 ein Bypasskanal 7 vorgesehen. Dieser Bypasskanal 7 kann beispielsweise gemeinsam mit dem Wandbereich 3 der Trennwand 1 in einem Arbeitsschritt, z.B. mittels eines Spritzgussverfahrens hergestellt werden. Durch den Bypasskanal 7 kann, wie später noch näher erläutert werden wird, Luft an dem Heizkörper 15, welcher in den Aufnahmeschlitz 4 der Trennwand 1 eingesetzt ist, vorbeigeführt werden.

Der Bypasskanal 7 weist an der in Fig. 1 rechts liegenden Seite eine einzelne Eintrittsöffnung 8 auf. Auf der dazu entgegengesetzten Seite verzweigt sich der Bypasskanal 7 über einen vorliegend V-förmig ausgebildeten Verteiler 9 in zwei Teilluftkanäle 10. Jeder der beiden Teilluftkanäle 10 verfügt über eine eigene Austrittsöffnung 11, so dass der Bypasskanal 7 im dargestellten Ausführungsbeispiel zwei Austrittsöffnungen 11 aufweist. Die Teilluftkanäle 10 sind in Fig. 1 nicht geschlossen ausgeführt. Ein derartiger Aufbau ist möglich, wenn die U-förmig gebogenen Wände 12 der Teilluftkanäle 11 derart mit dem Gehäuse 14 der Kraftfahrzeugklimaanlage 2 zusammenwirken, dass sich schlussendlich ein jeweils weitgehend dichter, geschlossener Teilluftkanal 10 ergibt.

In Fig. 2 sind schematisch die Einbauverhältnisse der Trennwand 1 in eine Kraftfahrzeugklimaanlage 2 dargestellt. Die Kraftfahrzeugklimaanlage 2 ist dabei von vorne, also von der Fahrzeugkabine aus gesehen, dargestellt, wenn die Kraftfahrzeugklimaanlage 2 in ein Kraftfahrzeug eingebaut ist. Die Lage des Heizkörpers 15 ist in Fig. 2 durch eine gestrichelte Linie 15 angedeutet. In der Symmetrieebene 16 der vorliegend als Zweizonenklimaanlage ausgebildeten Kraftfahrzeugklimaanlage 2 liegt der Wandbereich 3 der Trennwand 1. Oberhalb des Wandbereichs 3 der Trennwand 1 ist der Bypasskanal 7 im Querschnitt zu erkennen. Dieser kann in beliebiger Weise kreisförmig, ovalartig oder als Polygon (mit z.B. drei, vier, fünf oder sechs Ecken) geformt sein. Weiterhin ist der V-förmige Verteiler 9 zu erkennen, der den Bypasskanal 7 an einem Ende in die beiden Teilluftkanäle 10 verzweigt. Im Bereich der Austrittsöffnungen 11 der Teilluftkanäle 10 können gegebenenfalls noch Luftleitelemente 13 vorgesehen werden.

Wie aus Fig. 2 ersichtlich ist, sind die Austrittsöffnungen 11 der Teilluftkanäle 10 nicht bündig mit den Luftabgabeöffnungen 18, 19 für die Mitteldüsen und/oder Seitendüsen verbunden. Es sind vielmehr Spalte 22 vorhanden, über die die Luftabgabeöffnungen 18, 19 für die Mifteldosen/Seitendüsen bzw. die Austrittsöffnungen 11 der Teilluftkanäfe 10 mit der Luftmischkammer 23 in Verbindung stehen. Die Anordnung der Elemente ist jedoch so gewählt, dass die aus den Austrittsöffnungen 11 der Teilluftkanäle 10 austretende Luft im Wesentlichen vollständig durch die Luftaustrittsöffnungen für die linke 18 bzw. die rechte 19 Seftendüse/Mitteldüse austritt. Da die aus den Austrittsöffnungen 11 der Teilluftkanäle 10 austretende Luft mit Hilfe des Bypasskanals 7 am Heizkörper 15 vorbeigeführt wurde, weist sie eine niedrigere Temperatur auf, als die Luft, die dem Hauptluffinreg gefolgt ist und den Heizkörper 15 durchströmt hat. Dadurch weist die aus den Mitteldüsen/Seitendüsen 18, 19 austretende Luft eine niedrigere Temperatur auf, als die Luft, die beispielsweise aus der Luftabgabeöffnung 17 für Windschutzscheibe oder aus der Luftabgabeöffnung für den linken 20 bzw. den rechten 21 Fußraumkanal austritt. Es ist darauf hinzuweisen, dass selbstverständlich zusätzlich zur aus den Teilluftkanälen 10 austretenden Luft auch Luft, die über die Luftmischkammer 23 und die Spalte 22 strömt, aus den Luftabgabeöffnungen 18, 19 für die Seitendüsen/Mitteldüsen austreten kann.

Ist der Bypasskanal 7 geschlossen, so kommt es keiner (zusätzlichen) Lufttemperaturabsenkung für die aus der Luftabgabeöffnung 18, 19 für die Mitteldüse und Seitendüse austretenden Luft. In diesem Fall erfolgt die Luftversorgung für diese Düsen 18, 19 ausschließlich über Luftmischkammer 23 und die Spalte 22.

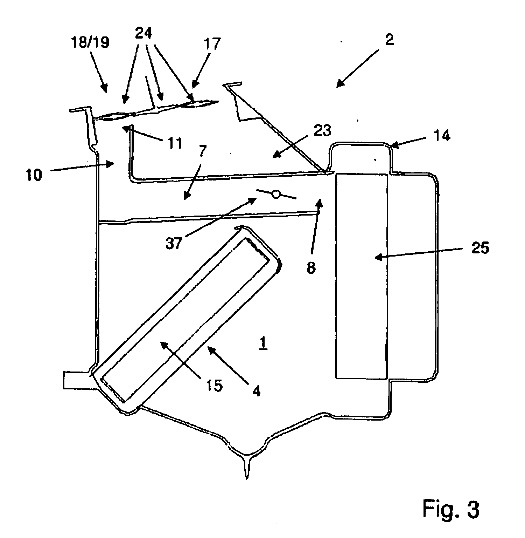

In Fig. 3 ist die in Fig. 2 dargestellte Anordnung zur Verdeutlichung nochmals schematisch im Querschnitt von der Seite aus gesehen dargestellt. Der Schnitt verläuft dabei entlang der Symmetrieebene 16 und liegt damit im Wandbereich 3 der Trennwand 1. In Fig. 3 ist deutlich zu erkennen, wie ein Teil der vom Verdampfer 25 gekühlten Luft über die Eintrittsöffnung 8 des Bypasskanals 7 abgezweigt wird, und am Heizkörper 15, der im Aufnahmeschlitz 4 der Trennwand 1 angeordnet ist, vorbeigeführt wird. Im Querschnitt der Fig. 3 ist auch gut zu erkennen, wie die Luftaufbereitung für die Luftabgabeöffnung 17 für die Windschutzscheibe bzw. für die Luftabgabeöffnung 18, 19 für die Müteldüsen/Seitendüsen erfolgt. Die Luftabgabeöffnung 17 für die Windschutzscheibe wird im Wesentlichen ausschließlich von der Luftmischkammer 23 mit Luft versorgt. Dagegen wird die Luftabgabeöffnung 18, 19 für die Mitteldüsen/Seitendüsen sowohl von der Luftmischkammer 23, als auch über den Bypasskanal 7 mit Luft versorgt.

Zusätzlich sind in Fig. 3 auch noch Verstellklappen 24 zu erkennen, mit denen die Menge an Luft, die durch die Luftabgabeöffnung 17 für die Windschutzscheibe bzw. die durch die Luftabgabeöffnung 18, 19 für die Mitteldüsen/Seitendüsen abgegeben wird, gesteuert werden kann

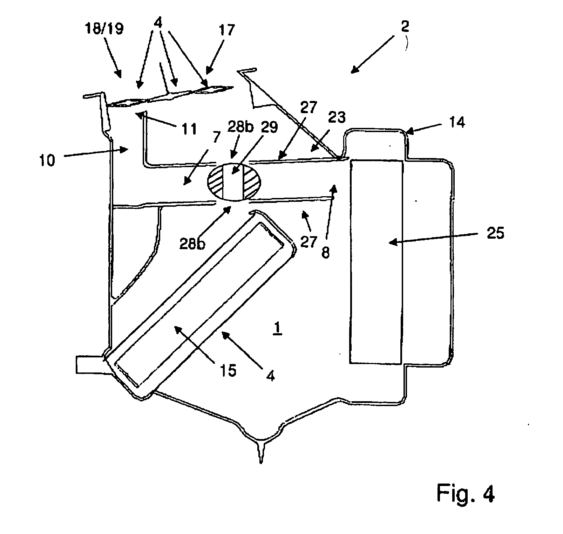

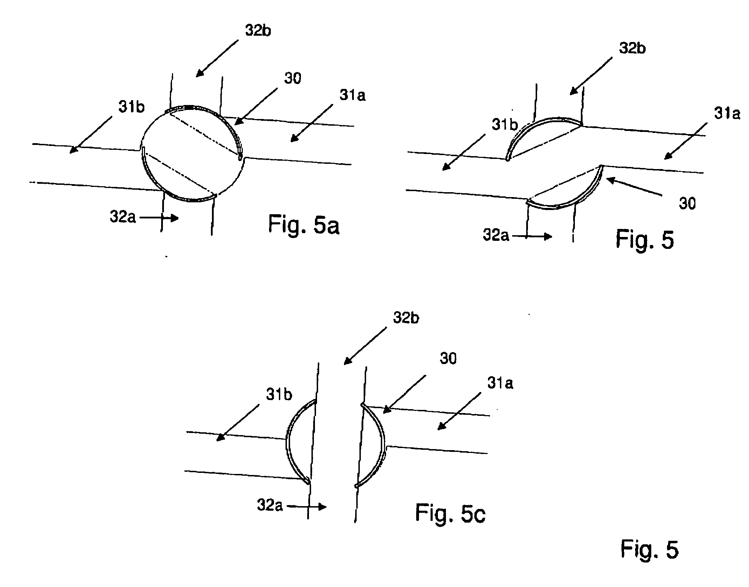

Weiterhin ist im Bypasskanal 7 eine Steuerklappe 37 zu erkennen. Mit Hilfe der Steuerklappe 37 kann der Luftdurchtritt durch den Bypasskanal 7 verändert werden. Damit kann das Ausmaß der Temperaturabsenkung and der Luftabgabeöffnung 18, 19 für die Mitteldüsen/Seftendasen geändert werden. In Fig. 4 ist eine gegenüber Fig. 3 leicht veränderte Kraftfahrzeugklimaanlage 26 dargestellt. Hier sind in den seitlichen Kanalwänden 27 des Bypasskanals 7 zwei Ausnehmungen 28a, 28b vorgesehen. Weiterhin ist im Bereich dieser Ausnehmungen 28a, 28b im Bypasskanal 7 ein Stellventil 29 angeordnet. Das Stellventil 29 ist nur schematisch dargestellt und kann je nach den konkreten Erfordernissen einen unterschiedlichen Aufbau aufweisen. Möglich Aufbauvarianten für das Stellventil 29 sind mit weiteren Erläuterung im Folgenden unter Bezugnahme auf die Fig. 5 bis 8 beschrieben.

In Fig. 5 ist eine erste mögliche Bauform für das in Fig. 4 dargestellte Stellventil 29 gezeigt. Vorliegend ist das Stellventil 29 als Trommelklappe 30 ausgebildet. Bei einer derartigen Ausführung des Stellventils 29 ist es erforderlich, dass der Eintrittskanal 31 a und der Austrittskanal 31 b im Bypasskanal 7 und/oder der Eintrittskanal 32a und der Austrittskanal 32b der seitlichen Ausnehmungen 28a, 28b in den Kanalwänden 27 des Bypasskanals 7 seitlich gegeneinander versetzt sind.

In Fig. 5a ist die Trommelklappe 30 in einer Sperrstellung gezeigt. Hier bleibt die Luftverteilungscharakteristik der Kraftfahrzeugklimaanlage 2 unverändert. In Fig. 5b befindet sich die Trommelklappe 30 dagegen in einer Stellung, in der die Temperatur der aus der Mitteldüse/Seitendüse 18, 19 austretenden Luft maximal abgesenkt wird. In Fig. 5c ist die Trommelklappe in einer Abtaustellung für die Windschutzscheibe (sogenannte Defrost-Stellung). In dieser Stellung erfährt die Luftabgabeöffnung 17 für die Windschutzscheibe eine zusätzliche Beaufschlagung mit Warmluft.

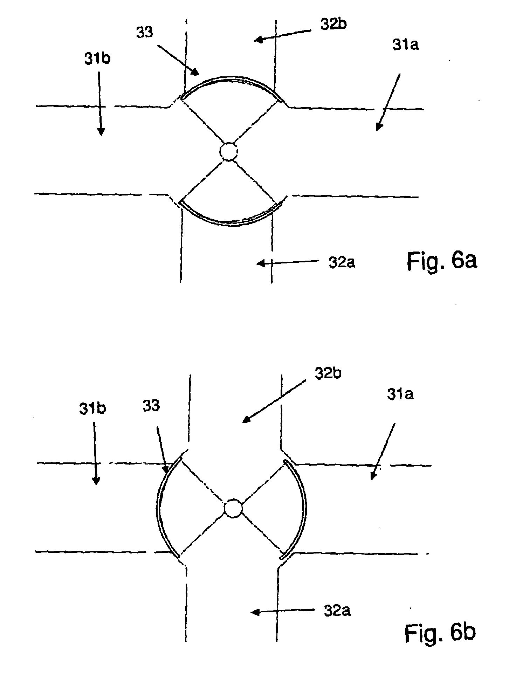

In Fig. 6 ist das Stellventil 29 als starr gekoppelte Schaukelklappe 33 ausgeführt. Hier kann die Schaukelklappe 33 zwischen einer Stellung für einen maximalen Bypassluftstrom (Fig. 6a, entspricht der Situation in Fig. 5b) und einer Abtaustellung für die Windschutzscheibe (Fig. 6b, entspricht der Situation in Fig. 5c) verstellt werden. Eine Sperrstellung (analog zur Situation in Fig. 5a) ist jedoch nicht realisierbar.

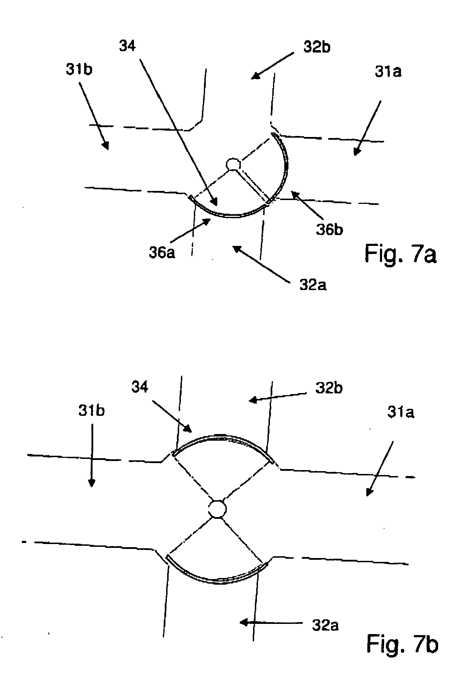

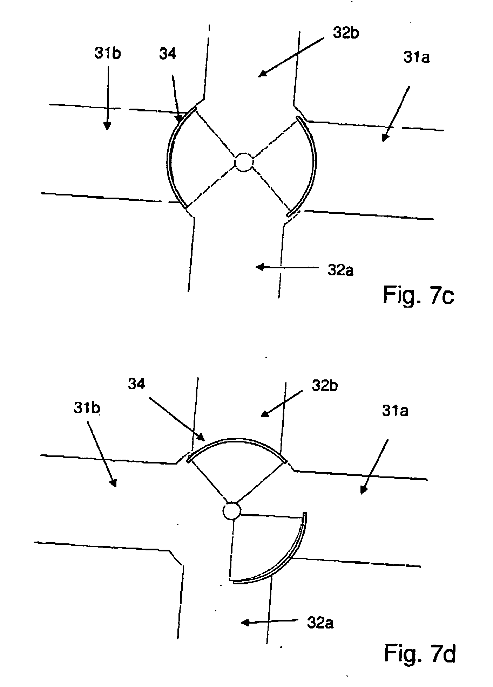

In Fig. 7 wird anstelle einer starr gekoppelten Schaukelklappe 33 eine zweiflügelige Schaukelklappe 34 mit zwei Klappenflügeln 36a, 36b verwendet. Dadurch kann zusätzlich zu der Stellung für einen maximalen Bypassluftstrom (Fig. 7b, entspricht der Situation in Fig. 5b und Fig. 6a) und der Abtaustellung für die Windschutzscheibe (Fig. 7c, entspricht der Situation in Fig. 5c und Fig. 6b) erneut eine Sperrstellung (Fig. 7a, entspricht der Situation in Fig. 5a) realisiert werden. Zusätzlich sind auch Mischstellungen möglich, wobei in Fig. 7d ein exemplarisch herausgegriffenes Beispiel hierfür dargestellt sind. Dadurch kann die Kraftfahrzeugklimaanlage besonders flexibel individuellen Komfortwünschen angepasst werden.

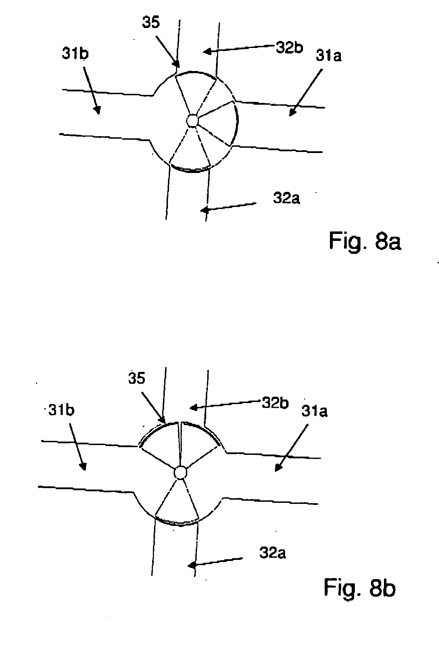

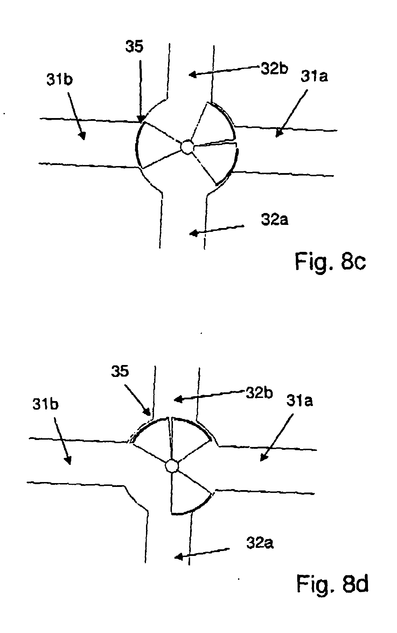

Wie in Fig. 8 dargestellt, kann auch eine dreiflügelige Schaukelklappe 35 verwendet werden. Hier sind besonders vielfältige Einstellmöglichkeiten erzielbar. Neben einer Sperrstellung (Fig. 8a, entspricht der Situation in Fig. 5a und 7a), kann eine Stellung für einen maximalen Bypassluftstrom (Fig. 8b, entspricht der Situation in Fig. 5b, Fig. 6a und Fig. 7b) und eine Abtaustellung für die Windschutzscheibe (Fig. 8c, entspricht der Situation in Fig. 5c, Fig. 6b und Fig. 7c) realisiert werden. Ähnlich zu einer zweiflügeligen Schaukelklappe 34 sind auch bei einer dreiflügeligen Schaukelklappe 35 Mischstellungen möglich. In Fig. 8d ist ein Beispiel hierfür dargestellt. Auch hier kann kann die Kraftfahrzeugklimaanlage besonders flexibel individuellen Komfortwünschen angepasst werden.

## Patentansprüche

1. Trennwand (1) für Kraflfahrzeugklimaanlagen (2), insbesondere Mitteltrennwand für Mehrzonenkraftfahrzeugklimaanlagen, wobei wenigstens einen integral ausgebildeten Luftführungskanal (7) vorhanden ist, **dadurch gekennzeichnet, dass** an zumindest einem Ende (9) zumindest eines Luftführungskanals (7) eine Verzweigung (9) in eine Mehrzahl von Teilkanälen (10) vorgesehen ist.

2. Trennwand (1) nach Anspruch 1, **dadurch gekennzeichnet, dass** wenigstens ein Luftführungskanal (7) zumindest bereichsweise im Wesentlichen längs der Ebene (3) der Trennwand (1) verläuft.

3. Trennwand (1) nach Anspruch 1 oder 2, **gekennzeichnet durch** eine Aufnahmeöffnung (4) für einen Wärmetauscher (15, 25), insbesondere für einen Heizkörper.

4. Trennwand (1) nach einem der vorangehenden Ansprüche, **dadurch gekennzeichnet, dass** wenigstens ein Luftführungskanal (7) derart ausgebildet und eingerichtet ist, dass die darin geführte Luft wenigstens einen in der Kraftfahrzeugklimaanlage (2) vorgesehenen Wärmetauscher (15, 25) und/oder wenigstens eine in der Kraftfahrzeugklimaanlage (2) vorgesehene Luftmischkammer (23) umgeht.

5. Trennwand (1) nach einem der vorangehenden Ansprüche **dadurch gekennzeichnet, dass** an wenigstens einer Seitenwand (27), vorzugsweise an wenigstens zwei Seitenwänden (27) des Luftführungskanals (7) jeweils wenigstens eine Seitenöffnung (28a, 28b) vorhanden ist.

6. Trennwand (1) nach einem der vorangehenden Ansprüche, **gekennzeichnet durch** wenigstens eine Luftdurchlassveränderungseinrichtung (29, 30, 33, 34, 35, 37), welche vorzugsweise als Luftmengenveränderungseinrichtung und/oder als Luftrichtungsveränderungseinrichtung und/oder als Luftverschlusseinrichtung ausgebildet ist.

7. Kraftfahrzeugklimaanlage (2), **gekennzeichnet durch** zumindest eine Trennwand (1) nach einem der Ansprüche 1 bis 6.

8. Kraftfahrzeugklimaanfage (2) nach Anspruch 7, **dadurch gekennzeichnet, dass** zumindest einer der integral mit der Trennwand (1) ausgebildeten Luffführungskanäle (7) zumindest einen Heizwärmetauscher (15) und/oder zumindest einen Kühlwärmetauscher (25) umgeht.

9. Kraftfarzeugklimaanlage (2) nach Anspruch 7 oder 8, **dadurch gekennzeichnet, dass** die durch zumindest einen der integral in der Trennwand (1) ausgebildeten Luftführungskanäle (7) geführte Luft zumindest zeitweise und/oder zumindest teilweise der Luftversorgung eines Teils der Luftauslässe (17, 18, 19, 20, 21) der Kraftfahrzeugklimaanlage, vorzugsweise von Mitteldüsenluftauslässen (18, 19) und/oder von Seitendüsenluftauslässen dient.

## Claims

1. A partition (1) for motor vehicle air-conditioning systems (2), in particular a center partition for multizone motor vehicle air-conditioning systems, at least one integrally formed air duct (7) being present, **characterized in that** a branching (9) into a plurality of sub-ducts (10) is provided on at least one end (9) of at least one air duct (7).

2. The partition (1) according to claim 1, **characterized in that** at least one air duct (7) runs in at least some regions substantially along the plane (3) of the partition (1).

3. The partition (1) according to claim 1 or 2, **characterized by** a receiving opening (4) for a heat exchanger (15, 25), in particular for a radiator,

4. A partition (1) according to any one of the preceding claims, **characterized in that** at least one air duct (7) is designed and equipped such that the air conducted therein bypasses at least one heat exchanger (15, 25) provided in the motor vehicle air-conditioning system (2) and/or at least one air mixing chamber (23) provided in the motor vehicle air-conditioning system (2).

5. A partition (1) according to any one of the preceding claims, **characterized in that** at least one respective lateral opening (28a, 28b) is present on at least one lateral wall (27), preferably on at least two lateral walls (27) of the air duct (7).

6. A partition (1) according to any one of the preceding claims, **characterized by** at least one air flow changing device (29, 30, 33, 34, 35, 37), which is preferably designed as an hair volume changing device and/or as an air direction changing device and/or as an air flow blocking device.

7. An air-conditioning system (2), **characterized by** at least one partition (1) according to any one of claims 1 to 6.

8. The air-conditioning system (2) according to claim 7, **characterized in that** at least one air ducts (7) designed integral with the partition (1) bypasses at least one heating heat exchanger (15) and/or at least one cooling heat exchanger (26),

9. The air-conditioning system (2) according to claim 7 or 8, **characterised in that** the air conducted through at least one of the hair ducts (7) designed integral with the partition (1) is used at least at intervals and/or at least partially to supply air to some of the vents (17, 18, 29, 20, 21) of the air-conditioning system, preferably of center nozzle vents (18, 19) and/or lateral nozzle vents.

## Revendications

1. Paroi de séparation (1) pour des systèmes de climatisation (2) de véhicules automobiles, en particulier paroi de séparation centrale pour des systèmes de climatisation multizones d'un véhicule automobile où est présent au moins un conduit de guidage d'air (7) configuré de façon intégrée,
**caractérisée en ce qu'**il est prévu une ramification (9) en une pluralité de conduits partiels (10), au niveau d'au moins une extrémité (9) d'au moins un conduit de guidage d'air (7).

2. Paroi de séparation (1) selon la revendication 1, **caractérisée en ce qu'**au moins un conduit de guidage d'air (7) s'étend, au moins de façon partielle, pratiquement le long du plan (3) de la paroi de séparation (1).

3. Paroi de séparation (1) selon la revendication 1 ou 2, **caractérisée par** une ouverture de logement (4) pour un échangeur de chaleur (15, 25), en particulier pour un radiateur.

4. Paroi de séparation (1) selon l'une quelconque des revendications précédentes, **caractérisée en ce qu'**au moins un conduit de guidage d'air (7) est configuré et agencé de manière telle, que l'air guidé à l'intérieur contourne au moins in échangeur due chaleur (15, 25) prévu dans le système de climatisation (2) du véhicule automobile et / ou as moins une chambre de mélange d'air (23) prévue dans le système de climatisation (2) du véhicule automobile.

5. Paroi de séparation (1) selon l'une quelconque des revendications précédentes, **caractérisée** et ce qu'il est prévu à chaque fois au moins une ouverture latérale (28a, 28b) sur au moins une paroi latérale (27), de préférence sur au moins deux parois latérales (27) du conduit de guidage d'air (7).

6. Paroi de séparation (1) selon l'une quelconque des revendications précédentes, **caractérisée par** au moins un dispositif de modification du passage de l'air (29, 30, 33, 34, 35, 37) qui est configuré, de préférence, comme un dispositif de modification du débit d'air est / ou comme un dispositif de modification de la direction de l'air et / ou comme un dispositif d'obturation d'air.

7. Système de climatisation (2) d'un véhicule automobile, **caractérisé par** au moins une paroi de séparation (1) selon l'une quelconque des revendications 1 à 6.

8. Système de climatisation (2) d'un véhicule automobile selon la revendication 7, **caractérisé en ce qu'**au moins l'un des conduits de guidage d'air (7) configurés de façon intégrée à la paroi de séparation (1) contourne au moins un échangeur de chaleur de chauffage (15) et / où au moins un échangeur de chaleur due refroidissement (25).

9. Système de climatisation (2) d'un véhicule automobile selon la revendication 7 ou 8, **caractérisé en ce que** l'air guidé par au moins l'un des conduits de guidage d'air (7) configurés de façon intégrée à la paroi de séparation (1) sert au moins temporairement et / ou au moins partiellement à l'alimentation d'air d'une partie des sorties d'air (17, 18, 19, 20, 21) du système de climatisation du véhicule automobile, de préférence de sorties d'air (18, 19) par des buses centrales et / ou de sorties d'air par des buses latérales.
